# EUROPÄISCHE PATENTSCHRIFT

(11) **EP 0 382 329 B1**
(45) Veröffentlichungstag und Bekanntmachung des Hinweises auf die Patenterteilung: **12.04.1995**
(21) Anmeldenummer: 90250039.6
(22) Anmeldetag: 08.02.1990
(51) Int. Cl.: B01D 46/52, B01D 46/10

(54) **Filtereinsatz**
Filter cartridge
Cartouche filtrante

(30) Priorität: 08.02.1989 DE 3903698; 19.05.1989 DE 3916838
(43) Veröffentlichungstag der Anmeldung: 16.08.1990
(73) Patentinhaber: Firma Carl Freudenberg, 69469 Weinheim (DE)
(72) Erfinder: Lippold, Hans-Joachim, Dr., D-14089 Berlin (DE)

(56) Entgegenhaltungen:
- DE-A- 2 138 412
- DE-B- 2 835 181
- FR-A- 2 427 123
- US-A- 3 531 920

## Beschreibung

Die Erfindung betrifft einen Filtereinsatz der im Oberbegriff des Anspruchs 1 angegebenen Art.

Ein aus der US-A-3 531 920 bekannter Filtereinsatz hat quaderförmige Gestalt und besteht aus einem Filterelement, das im Zick-Zack gefaltet ist. Aus Faltenwänden treten parallel zueinander verlaufende Vorsprünge hervor, wobei die Vorsprünge an beiden Seiten der Faltwände aus der Ebene der Faltenwände herausragen und die Vorsprünge benachbarter Faltenwände an ihren Berührungsflächen aneinander anliegen. Jeder der sich senkrecht zu den Falze bildenden Kanten der Zick-Zack-Faltung erstreckenden Vorsprünge weist eine in Bewegungsrichtung des Mediums allmählich zunehmende bzw. abnehmende Höhe und mit in Richtung der zunehmenden Höhe zunehmende Breite auf. Jeweils zwei innerhalb der Faltenwand benachbarte Vorsprünge erstrecken sich in bezug auf die Ebene der Faltenwand in einander entgegengesetzte Richtungen, sind also erhaben bzw. vertieft geprägt.

Die Vorsprünge sind dabei so angeordnet, daß jedem erhabenen Vorsprung in der Faltenwand ein entsprechender ebenfalls erhaben geprägter Vorsprung in der benachbarten Faltenwand zugeordnet ist, derart, daß die einander zugeordneten Vorsprünge durch die Zick-Zack-Faltung aufeinander zu liegen kommen und sich im Bereich der Berührungsflächen abstützen.

Auf diese Weise wird zwischen den benachbarten Faltenwänden ein in Bewegungsrichtung des Mediums gleichmäßig abnehmender, bzw. nach Durchtritt des Mediums durch die Wandung zunehmender, Abstand gesichert.

Nachteilig ist dabei, daß in Bewegungsrichtung des Mediums die Breite der Vorsprünge zu- bzw. abnimmt, so daß das zu filternde Medium in seiner Strömungsrichtung seitlich abgelenkt wird. Dadurch ist der Strömungswiderstand vergrößert und eine stärkere Förderleistung für das zu filternde Medium ist erforderlich. Durch die zunehmende Breite der Vorsprünge wird weiterhin die für den Durchtritt des zu filternden Mediums im Bereich der Wandung zur Verfügung stehende Fläche verringert.

Weiterhin nimmt die Breite eines zwischen zwei benachbarten Vorsprüngen für das Medium gebildeten Kanals in Bewegungsrichtung des Mediums zu. Durch die damit verbundene Querschnittsänderung erhöht sich der Strömungswiderstand zusätzlich in unerwünschter Weise. Um die Filterung großer Mengen eines Mediums wirtschaftlich zu ermöglichen, soll die für den Filtervorgang bereitzustellende Energie möglichst gering sein, zumal die entsprechenden Antriebsmittel mit zunehmender Leistung auch vermehrte Geräusche verursachen.

Aus FR-A-2427123 ist ein (hier zylinderförmiger) Filtereinsatz nach dem Oberbegriff des Anspruchs 1 bekannt, dessen Strömungswiderstand und Geräuschent-Wicklung durch Vorsehen von Vorsprüngen Konstanter Breite vermindert ist. Die mechanische Stabiltät und Handhabbarkeit der Anordung ist jedoch verbesserungswürdig.

Der Erfindung liegt die Aufgabe zugrunde, einen Filtereinsatz der eingangs genannten Gattung zuschaffen, wobei bei einfacher Konstruktion eine hohe Stabilität und gute Handhabbarkeit der Anordnung gewährleistet sein soll.

Diese Aufgabe wird durch einen Filtereinsatz mit den Merkmalen des Anspruchs 1 gelöst.

Entsprechend der Erfindung ist eine nur die Vorsprünge bedeckende und aussteifende, aushärtbare Beschichtung und/oder Tränkung vorgesehen, welche die Steifigkeit der Anordnung heraufsetzt, wobei sich die Beschichtung oder Tränkung auf die Seitenwandungen der Vorsprünge erstreckt, da diese die Faltenwände aussteifende "Rippen" bilden.

Insbesondere erweist es sich als günstig, die örtliche Dicke der Beschichtung bzw. die Intensität der Tränkung mit dem Abstand der Erhebung der Vorsprünge, bezogen auf die Ebene der Faltenwand, zu verstärken, da dadurch, die durch die Prägung entstandenen, sich verjüngenden Wandungen der Vorsprünge entsprechend verfestigt und stabilisiert werden. Vorzugsweise besteht die Beschichtung bzw. Tränkung aus einem aushärtbaren Klebstoffmaterial.

Der Bereich des Übergangs von demjenigen Ende des Vorsprungs, das den größten Abstand bezogen auf die Ebene der Faltenwand aufweist, in die Ebene der Faltenwand ist strömungsgünstig ausgebildet, wobei zunächst ein Bereich größerer Steigung zwischen Bereichen geringerer Steigung angeordnet ist. Zusätzlich gehen insbesondere die Bereiche geringerer Steigung kontinuierlich in die angrenzenden ebenen Bereiche über. Die Druckdifferenzen im Durchtrittsbereich des Filtermaterials werden für das zu filternde Medium kleiner und die Strömung angenähert laminar.

In einer weiteren bevorzugten Ausführung sind die Faltenkanten im Faltengrund trapezartig verbreitert ausgebildet. Dadurch wird die Druckverteilung zusätzlich homogenisiert, insbesondere kann die Höhe der Faltenwand damit größer als bisher ausgelegt werden, ohne daß nachteilige hohe Druckunterschiede beim Durchtritt des zu filternden Mediums im Bereich der Durchtrittsfläche des Filtermaterials entstehen. Diese geringen Druckunterschiede sind insbesondere auch auf die geringe Materialanhäufung im Bereich der Faltenkante bzw. auf die Möglichkeit zurückzuführen, daß dem zu filternden Medium in diesem Bereich eine größere Filterfläche zur Verfügung steht. Weiterhin bleibt die für den Filtervorgang günstige laminare Strömung erhalten. Die größere Höhe der Faltenwände erweitert nicht nur die Filterfläche, sondern verbessert auch die Filtereigenschaften insgesamt, hierbei insbesondere den Abscheidegrad. Auch ergibt sich durch die verbreiterte Ausbildung der Faltenkante mit der größeren Höhe ein wesentlich günstigeres Verhältnis der Druckdifferenz zur Faltenhöhe. Daraus resultieren größere Stabilität und eine erhöhte Lebensdauer des jeweiligen Filtereinsatzes.

Bei einer weiteren vorteilhaften Ausführung der Erfindung erweist es sich als günstig, daß das Klebstoffmaterial netz- bzw. gespinstartig auf dem Filtermedium, insbesondere im Bereich der Vorsprünge, vorgesehen ist. Dadurch wird ein vollständiges Verdichten der Oberfläche des Filtermediums verhindert. Dennoch ist das Filtermaterial in ausreichender Weise ausgesteift und die Filtereigenschaften sind in diesem Bereich nur gering beeinträchtigt. Weiterhin wird Klebstoffmaterial eingespart.

In einer weitern bevorzugten Ausführung des Filtereinsatzes weist das Filtermaterial mindestens einen Anteil von thermoplastischen Fasern auf, so daß gezielt eine bleibende Verformung und Bereiche höherere Steifigkeit durch Wärmebehandlung, auch in Form einer Verschweißung des Filtermaterials, innerhalb der Filterschicht herstellbar sind. Dabei werden trotz der durch das Verschweißen enstehenden erhöhten Materialdichte die Filtereigenschaften als solche nicht bzw. in den verformten Bereichen nur geringfügig beeinträchtigt. Die Filtereigenschaften sind aber in jedem Fall weitaus besser als bei herkömmlichen mit Binder versehenen Filtermaterialien. Durch die Möglichkeit, einzelne Filterlagen zu verbinden und somit ein Lösen der einzelnen Lagen voneinander zu verhindern, aber auch aufgrund der verbesserten hohen örtlichen Quer- bzw. Längssteifigkeit sind die erfindungsgemäß behandelten Filtermedien faltbar und somit für die meisten Filteranwendungen geeignet.

Die aus Kunststoffasermaterialien bestehenden Filtermedien weisen in vorteilhafter Weise einen höheren Abscheidegrad und geringere Druckdifferenzen gegenüber herkömmlichen Glasfasermaterialien auf. Daraus resultiert eine geringere notwendige Förderleistung und auch eine höhere Lebensdauer der Filtereinsätze. Hinzu kommt auch noch, daß die entsprechenden Antriebsmittel mit abnehmender Leistung weniger Geräusche verursachen. Vorteilhaft ist weiterhin, daß durch das Einprägen der Vorsprünge in das Filtermedium deren Wandungen trotz geschwächter Wandstärke ein gute Stabilität aufweisen. Damit kann trotz einer verringerten Zahl von Vorsprüngen die Filterfläche noch vergrößert werden. Der Strömungswiderstand wird dabei herabgesetzt und es sind homogene Strömungsverhältnisse gewährleistet. Daraus resultieren sowohl eine geringere Absaugleistung als auch eine reduzierte Geräuschentwicklung der Filteranlage sowie eine erhöhte Lebensdauer des Filtereinsatzes.

Durch den thermoplastischen, bereichsweise verschweißten Faseranteil wird in vorteilhafter Weise die Stabilität und die Aussteifung des Filtereinsatzes an vorbestimmten Bereichen, insbesondere an Vorsprüngen, entsprechenden Übergangsbereichen und Faltenkanten, erhöht. Die dadurch erzielbare verringerte Anzahl von Vorsprüngen erweist sich als zusätzlich vorteilhaft, da ein günstiges Verhältnis der wirksamen Filterfläche zur Gesamtoberfläche der Faltenwände erreicht wird. Die Filtereinsätze lassen sich somit auch als Einwegartikel erzeugen, welche kostengünstig herstellbar sind und eine lange Standzeit aufweisen. Die aus thermoplastischem Werkstoff bestehenden Filterwandungen brauchen desweiteren nicht mit festen Abstandshaltern oder Aussteifungen aus Fremdmaterial versehen zu werden.

Die Fasern sind im verschweißten Zustand ohne wesentliche Hohlräume miteinander verbunden. Das durchlässige Filtermedium ist mehrlagig ausgebildet, wobei einzelne Lagen bereichsweise miteinander verschweißt sind, so daß ein Ablösen der einzelnen Lagen verhindert wird. Weiterhin ist vorteilhaft, wenn das durchlässige Filtermedium Fasern, mindestens aber Faseranteile, aus Polypropylen, Cellulose, Polycarbonat, Polyamid, Teflon und/oder Polyester enthält. Durch diesen Aufbau ist ein ausreichend hoher thermoplastischer Werkstoffanteil innerhalb des Filtermediums vorhanden und die Filtereigenschaften können den Anforderungen angepaßt werden. Als günstig erweist es sich auch, wenn die nahtförmigen verschweißten Bereiche in Form eines Filmscharniers ausgebildet werden.

Andere vorteilhafte Weiterbildungen der Erfindungen sind in den Unteransprüchen gekennzeichnet bzw. werden nachstehend zusammen mit der Beschreibung der bevorzugten Ausführungen der Erfindung anhand der Figuren näher dargestellt. Es zeigen:
Figur 1a eine perspektivische Ansicht eines Teils des Ausführungsbeispiels des erfindungsgemäßen Filtermaterials,
Figur 1b eine entsprechende Draufsicht,
Figur 2 einen Ausschnitt A als vergrößerte Teildarstellung von Figur 1a,
Figur 3 eine perspektivische Ansicht eines Teils des Filterelements in ungefaltetem Zustand,
Figur 4 eine perspektivische Draufsicht des zu einem Filtereinsatz gefalteten Ausführungsbeispiels unter Darstellung von die Falten arretierenden Verbindungsmitteln sowie
Figur 5 einen Querschnitt durch zwei aneinander anliegende Vorsprünge von Faltenwänden, die miteinander verklebt sind, in vergrößerter Darstellung.

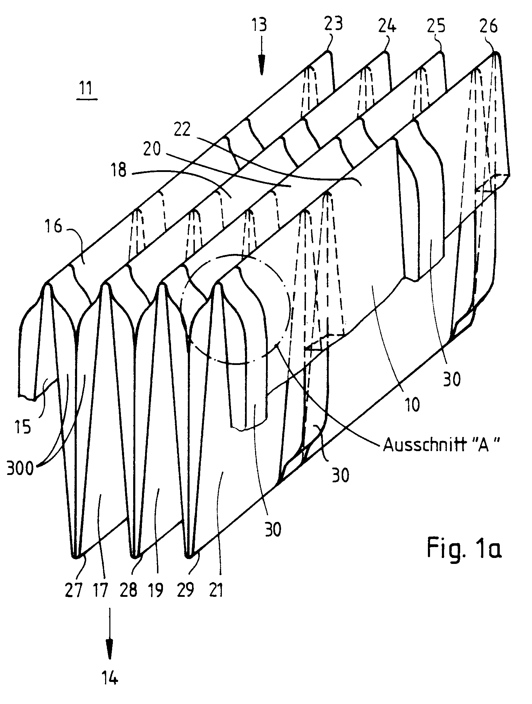

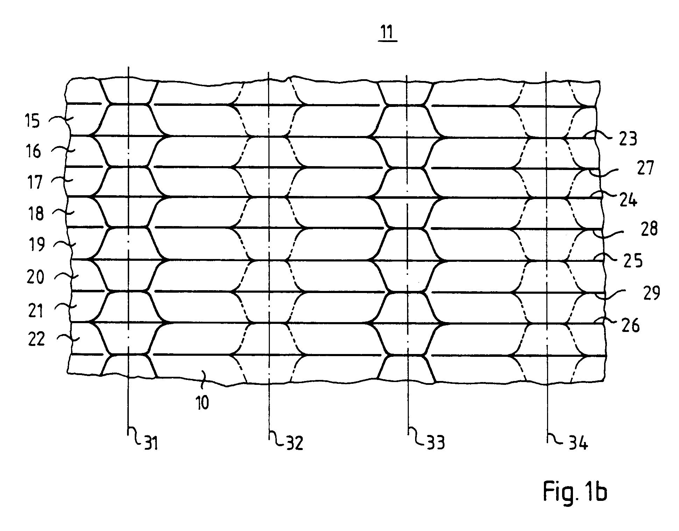

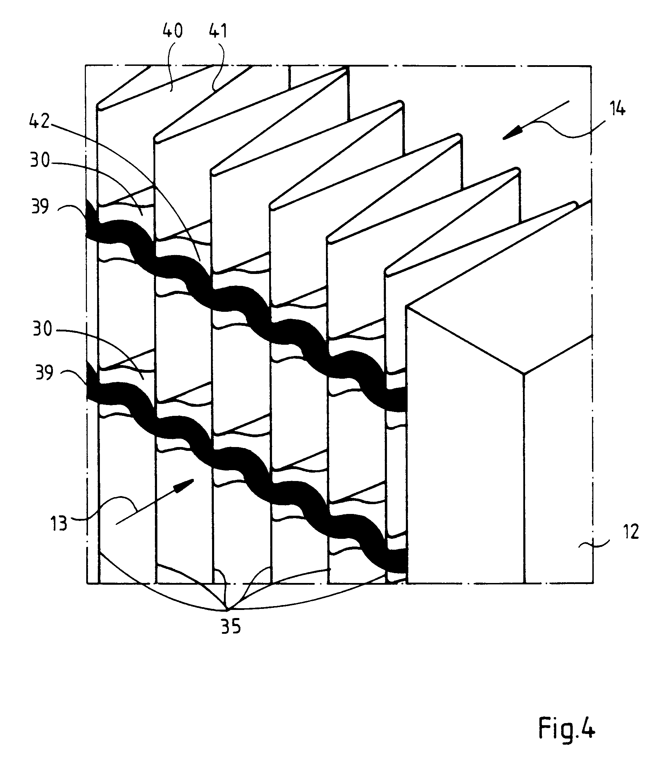

In den Figuren 1a und b und in Figur 4 ist jeweils ein Ausschnitt eines Filtermaterials 10, bestehend aus einem Filtervlies, dargestellt, das durch Zick-Zack-Faltung zu einem im wesentlichen quaderförmigen Filtereinsatz 11 geformt ist. Bei diesem Filtervlies handelt es sich insbesondere um ein Schwebstoffvlies. Grundsätzlich ist jedes Filtermaterial geeignet, das sich entsprechendend formen läßt.

Der quaderförmige Filtereinsatz 11 paßt in bekannter Weise in einen Rahmen 12, der den Filtereinsatz zusätzlich stabilisiert. Der Filtereinsatz kann - je nach Anwendungsfall - gegebenenfalls auch ohne Rahmen ausgebildet sein, wobei die Außenabmessungen an die für den Filtereinsatz vorgesehene Ausnehmung dem entsprechenden Aufnahmeteil angepaßt sind. Der Filtereinsatz wird von einer Eintrittsseite 13 durch das zu filternde Medium angeströmt, von wo das Strömungsmittel durch das Filtermaterial in Richtung einer gegenüberliegenden Austrittsseite 14 strömt, von der es über eine geeignete Abfuhrleitung abgezogen wird oder frei abströmt.

Das Filtermaterial 10, in Figur 1a und b, ist zick-zackförmig gefaltet, wobei eine Anzahl von Faltenwänden 15 bis 22 jeweils eine Falte bilden. Die Faltenwände 15 und 16 sind durch einen Falz 23 auf der Eintrittseite 13, die angeströmt wird, miteinander verbunden. Ebenso sind die Faltenwände 17 und 18 durch einen Falz 24, die Faltenwände 19 und 20 durch einen Falz 25 und die Faltenwände 21 und 22 durch einen Falz 26 miteinander verbunden; wohingegen die Faltenwände 16 und 17 durch einen Falz 27 auf der Seite 14 miteinander verbunden sind. Ebenso sind die Faltenwände 18 und 19 durch einen Falz 28 und die Faltenwände 20 und 21 durch einen Falz 29 auf der Austrittsseite 14 miteinander verbunden. Durch diese Faltung wird die Filtereinsatzoberfläche vergrößert und der Abscheidegrad des Filtereinsatzes 11 heraufgesetzt. Diese Verbesserung resultiert aus einer Optimierung der Geschwindigkeitsverteilung und Senkung der Druckdifferenz. Die Lebensdauer ist gegenüber herkömmlichen entsprechenden Filtern erhöht.

Die Faltenwände 15 bis 22 weisen materialeinheitliche Vorsprünge 30 auf, die durch Prägung des Filtermateriales (Schwebstoffiltervlieses) ausgebildet wurden. Die Vorsprünge 30 weisen in Bewegungsrichtung des zu filternden Mediums eine konstante Breite auf. Dabei ist die Breite geringer als die Höhe der maximalen Erhebungen der Vorsprünge bezogen auf die Ebene der Faltenwand. Die Seitenwandungen 300 der Vorsprünge 30 erstrecken sich senkrecht zu den die Faltenwände 15 bis 22 miteinander verbindenden Falzen 23 bis 29. Dabei weisen die Vorsprünge 30, ausgehend von den Falzen 27 bis 29 in Richtung auf die Falze 23 bis 26, eine zunehmende Höhe bezogen auf die Ebene der Faltenwände 15 bis 22 auf.

Der Berührungsbereich ist in Form einer rechteckigen Berührungsfläche der Vorsprünge 30 ausgebildet. Dadurch erhöht sich die Stabilität des Filtereinsatzes. Durch die Prägung der Faltenwände 15 bis 22 hat sich die Oberfläche des Filterelements entsprechend vergrößert und der zusätzliche benötigte Werkstoff wurde aus der zu prägenden Faltenwand durch den Prägevorgang gezogen. Dadurch sind die Wandungen der Vorsprünge 30 entsprechend dünner ausgebildet. Der aufgetragene Kleber verfestigt gerade diesen Bereich zusätzlich, so daß die durch die Verformung eingetretene Materialschwächung beseitigt bzw. je nach Kleberauftrag überkompensiert ist.

Die Vorsprünge 30 benachbarter Faltenwände 15 bis 22 liegen zur Abstandssicherung und Aussteifung aneinander an. Dabei sind z.B. die aneinander anliegenden Vorsprünge 30 zweier über einen Falz 27 verbundenen Faltenwände 16 und 17 in Richtung auf den jeweils gegenüberliegenden Falz 23 und 24 in ihrer Höhe, bezogen auf die jeweilige Faltenwand 16 oder 17, zunehmend ausgebildet, so daß zwischen diesen Faltenwänden 16 und 17 ein in Bewegungsrichtung des Mediums abnehmender bzw. nach Durchtritt des Mediums durch die jeweilige Faltenwand 16 oder 17 anwachsender Abstand festliegt. Auf diese Weise ist sichergestellt, daß bei insgesamt laminarer Strömung die gesamte Fläche des Filtermaterials gleichmäßig ausgenutzt wird und entlang des Transportwegs des Mediums keine Druckschwankungen auftreten, welche den Strömungswiderstand in unerwünschter Weise vergrößern.

Die Vorsprünge 30 sind entlang von Geraden 31 bis 34, die zueinader gleichen Abstand aufweisen, angeordnet. Dabei treten die Vorsprünge derart abwechselnd aus den Seiten 13 und 14 hervor, daß die Vorsprünge 30 auf den Geraden 31 und 33 aus der Eintrittsseite 13 hervortreten und die weiteren Vorsprünge 30, die entlang der Geraden 32 und 34 angeordnet sind, aus der Austrittsseite 14 hervortreten. Durch diese abwechselnde Anordnung der Vorsprünge 30 wird die Stabilität erhöht, da sowohl auf der Eintrittsseite 13 als auch auf der Austrittsseite 14 die Faltenwände in einem zueinander vorbestimmten Abstand gehalten werden.

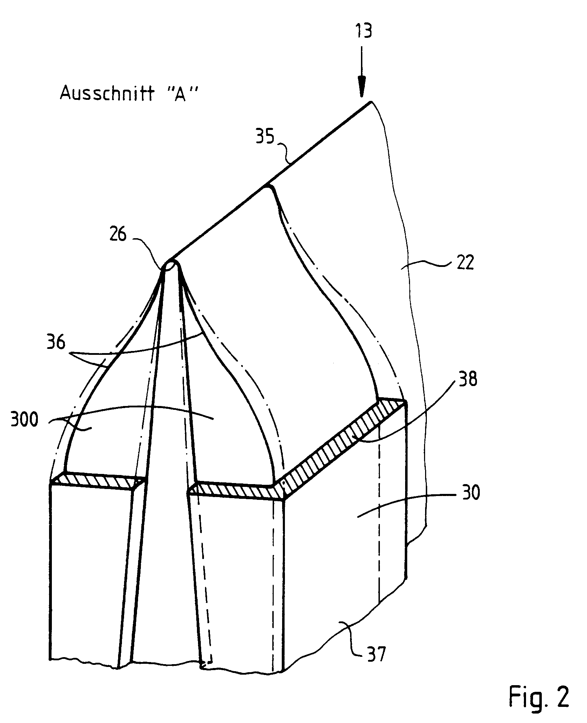

Der in Figur 2 dargestellte vergrößerte Ausschnitt A aus Figur 1 stellt einen Übergangsbereich 36 von der durch den Falz 26 gebildeten Faltenkante 35 zu dem aus der Faltenwand 22 hervortretenden Vorsprung 30 dar.

Der Bereich des Übergangs 36 erstreckt sich von demjenigen Ende des Vorsprungs 30, das den größten Abstand bezogen auf die Ebene der Faltenwand aufweist, in Richtung auf die Faltenkante 35 in die Ebene der Faltenwand 22. Dabei weist der Übergangsbereich 36 einen Bereich größerer Steigung auf, der zwischen zwei Bereichen geringerer Steigung angeordnet ist. Insbesondere gehen die Bereiche geringerer Steigung kontinuierlich in angrenzende ebene Bereiche über. Eine rechteckige Fläche 37 ist ein Teil der Berührungsfläche benachbarter aneinander anliegender Vorsprünge 30 der Faltenwände. Die Übergangsbereiche 36 sind strömungsgünstig ausgebildet, so daß der Strömungswiderstand, der u.a. durch die Vorsprünge hervorgerufen wird, sich verringert.

Über dem Vorsprung 30 und dem Übergangsbereich 36 ist eine den Vorsprung 30 und den Übergangsbereich 36 aussteifende, aushärtbare Klebebeschichtung 38 angeordnet, die am Ende des Vorsprungs 30 in Richtung auf die Faltenkante 35 aufgebrochen dargestellt ist, um die Ausbildung und Anordnung der einzelnen konstruktiven Elemente besser sichtbar zu machen. Die Klebebeschichtung 38 kann wahlweise auch als Tränkung 38 ausgebildet sein.

Die Klebebeschichtung 38 erstreckt sich auch auf die Seitenwandungen 300 der Vorsprünge 30 und des Übergangsbereichs 36. Die örtliche Dicke der Klebebeschichtung 38 nimmt dabei mit dem Abstand der Erhebung der Vorsprünge 30 bezogen auf die der Faltenwand 22 zu. Dadurch wird die durch die Prägung verursachte abnehmende Wanddicke der Vorsprünge 30 und damit auch die abnehmende Stabilität der Vorsprünge 30 durch die aushärtbare und die Vorsprünge aussteifende Klebebeschichtung 38 ausgeglichen. Die Vorsprünge erhalten durch die Klebebeschichtung 38 die für die beim Filtriervorgang auftretenden Kräfte benötigte Festigkeit und Stabilität.

Durch die aufgebrachte Klebebeschichtung 38 sind die benachbarten, aneinander angrenzenden Vorsprünge 30 miteinander verklebt. Dadurch wird der Filtereinsatz 11 stabilisiert und hält gleichzeitig seine Quaderform selbsttragend, ohne zusätzlichen Rahmen. Dies vereinfacht den Einbau der Filtereinsätze 11 in die bekannten Filtergehäuse 12 erheblich.

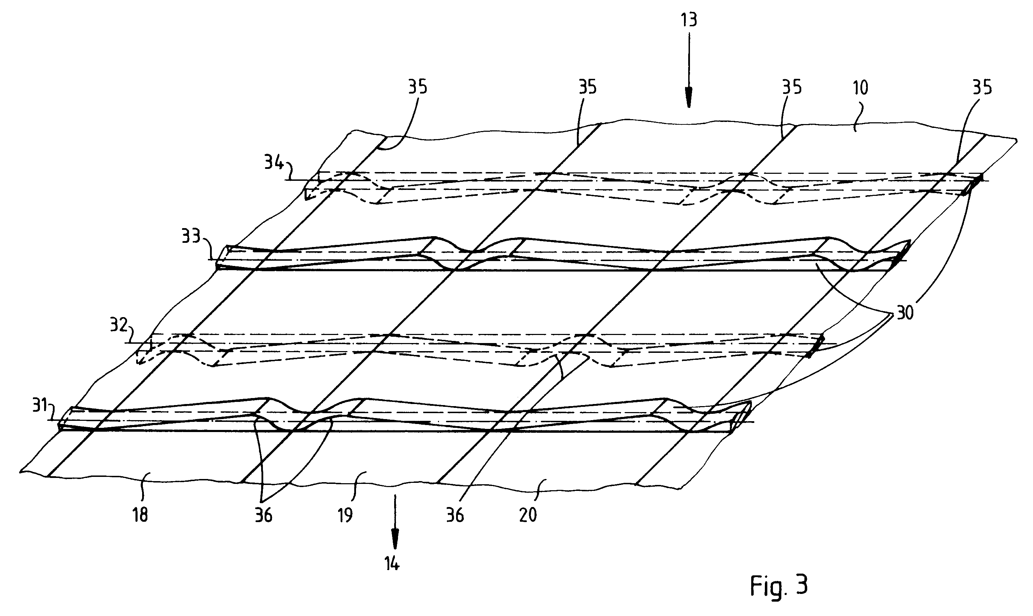

In Figur 3 ist in einer perspektivischen Ansicht ein Teil des Filtermaterials 10 in nicht gefaltetem Zustand dargestellt.

Es sind die abwechselnd aus der Eintrittsseite 13 und Austrittsseite 14 hervortretenden Vorsprünge 30 erkennbar. Die Vorsprünge 30 werden mittels zweier beidseitig des Filtermaterials 10 angeordneter Walzen, die hier nicht sichtbar sind, eingeprägt. Das Filtermaterial 10 läuft dabei folienartig durch die Prägewalzen. Es entstehen dadurch auf den Geraden 31 bis 34 fortlaufend eingeprägte Vorsprünge 30 mit den entsprechenden Übergangsbereichen 36 und den Faltenkanten 35. Anschließend läuft das Filterelement 10 wiederum durch beidseitig des Filtermaterials 10 angeordnete Walzen, die nicht sichtbar sind, die Hohlformen an ihren Walzwandungen aufweisen, die der Form der eingeprägten Vorsprünge 30 angepaßt sind. Die aushärtbare Klebebeschichtung 38 wird durch den Walzvorgang auf die Vorsprünge 30 und deren Seitenwandungen 300 aufgetragen. Durch die Walzenprägung der Vorsprünge 30 werden die Filterelemente 10 kostengünstig hergestellt und auch das Aufbringung der aushärtbaren Klebebeschichtung 38 erfolgt durch ein fertigungstechnisch vorteilhaftes Aufwalzen.

In Figur 4 ist ein Filtereinsatz 11 im Ausschnitt dargestellt, an dem zwei zueinander parallel verlaufende, den Filtereinsatz 11 stabilisierende Fäden 39 angeordnet sind. Die Fäden 39 verlaufen senkrecht zu den Faltenkanten 35 und verbinden die Faltenkanten 35 auf dem in der Draufsicht kürzesten Weg miteinander. Dabei liegen die Fäden jeweils an der Oberfläche des Filtereinsatzes 11 an. Ausgehend von der Faltenkante 35 auf der einen Faltenwand 40 verlaufen die Fäden 39 bis zu jeweils einem Vorsprung 30 dieser Faltenwand 40, der an jeweils einem Vorsprung 30 der gegenüberliegenden Faltenwand 41 anliegt. Die Fäden 39 verlaufen dann jeweils weiter auf der in Richtung der Faltenkante 35 weisenden Fläche 42 der Vorsprünge 30, bis zur benachbarten Faltenwand 41 und auf dieser bis zur nächsten Faltenkante. Die Fäden 39 sind endlos über die Faltenkanten 35 und die den Filtereinsatz 11 nach außen begrenzenden, hier nicht sichbaren, Faltenwände verlaufend angeordnet. Der Filtereinsatz 11 wird dadurch leicht handhabbar und erhält eine große Stabilität, so daß auch größere Ausführungen möglich sind.

Die Fäden bestehen aus einem homogenen schäumenden, klebenden und/oder sich verfestigenden Kunststoff bzw. auch Streifenmaterial aus Karton und dergleichen. Somit sind die Fäden 39 an dem auf den Filtereinsatz 11 aufliegenden Bereichen mit dem Filtereinsatz 11 verklebt. Ein Verrutschen der Fäden 39 wird dadurch verhindert und die Stabilität des Filtereinsatzes 11 heraufgesetzt. Die den Filtereinsatz 11 stabilisierenden Fäden 39 können bevorzugt im Bereich der den Filtereinsatz 11 nach außen begrenzenden, hier nicht sichtbaren, Faltenwände als Führung zum Einschieben des Filtereinsatzes in ein Filtergehäuse ausgebildet sein. Ein bequemes Auswechseln des Filtereinsatzes 11 ist dadurch möglich.

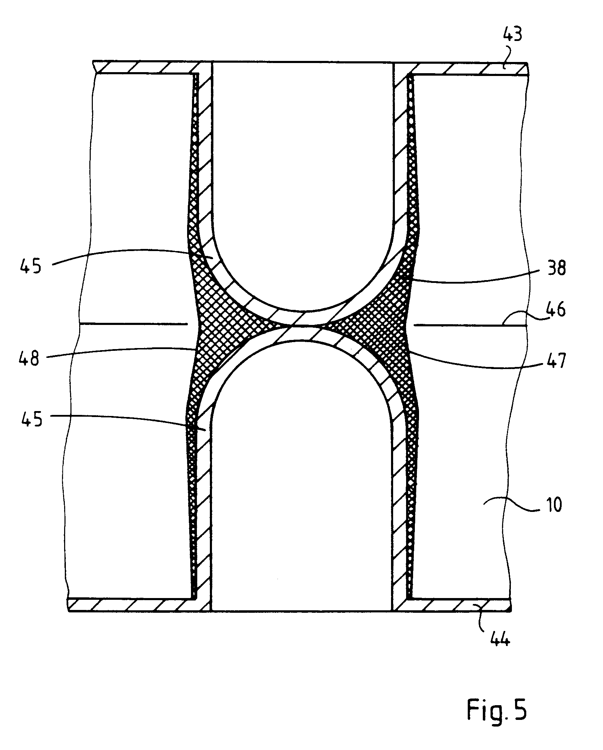

In Figur 5 sind zwei aneinander anliegende Vorsprünge 45 im Querschnitt vergrößert dargestellt, die in Faltenwände 43 und 44 eingeprägt sind. Die Vorsprünge 45 sind ausgehend von einem Falz 46 in Richtung auf die, hier nicht sichtbaren, gegenüberliegenden Falze mit zunehmender Höhe in bezug auf die jeweilige Ebene der Faltenwände 43 und 44 ausgebildet. Die Breite der Vorsprünge 45 ist konstant. Dabei ist diese Breite geringer als die Höhe der maximalen Erhebungen der Vorsprünge 45 bezogen auf die jeweiligen Faltenwände 43 und 44. Somit weisen die Vorsprünge 45 im wesentlichen die Eigenschaften der bereits beschriebenen Vorsprünge 30 auf. Der Unterschied liegt jedoch in den runden Ausformungen der Vorsprünge 45. Wahlweise können die Vorsprünge 45 auch abgeschrägt sein.

Bei der Klebebeschichtung 38 nimmt auch bei diesem erfindungsgemäßen Ausführungsbeispiel die örtliche Dicke mit dem Abstand der Erhebung der Vorsprünge 45 bezogen auf die jeweiligen Faltenwände 43 und 44 zu. Die Vorsprünge 45 berühren sich linenförmig und die Klebebeschichtung 38 wird mit dem aneinanderdrücken der Vorsprünge 45 seitlich der Berührlinie angeordnet, so daß die Klebebeschichtung 38 strömungsgünstige Seitenwandungen 47 und 48 bildet. Durch diese Ausbildung der Klebebeschichtung wird der Filtereinsatz 11 stabilisiert, so daß der Abstand zwischen den Geraden 31 bis 34, auf denen die Vorsprünge 30 bzw. 45 angeordnet sind, heraufgesetz wird. Durch die strömungsgünstigen Seitenwandungen 47 und 48 strömt das zu filtrierende Medium laminar. Der Strömungswiderstand vermindert sich ebenfalls durch eine geringere Anzahl von Vorsprüngen und damit vermindert sich auch die zum Absaugen bzw. Durchdrücken benötigte Energie.

In einem weiteren, hier nicht dargestellten, Ausführungsbeispiel weist das Filtermaterial 10 aus thermoplastischen Werkstoff bestehende Fasern auf. Die thermoplastischen Fasern sind dabei in einem solchen Anteil enthalten, daß das Filtermaterial 10 mittels lokaler thermischer Behandlung bereichsweise verschweißt und somit in sich selbst verdichtet bzw. ausgesteift und mit gleichartigem Material verbunden ist.

Die Faltenkanten 23 bis 29 sind durch entsprechende Druck-und/oder Temperaturbedingungen verursachtes Verschweißen von Fasern erzeugt und weisen jeweils die Form eines Filmscharniers auf. Die Fasern sind dabei ohne wesentliche Hohlräume miteinander verbunden. Das durchlässige Filtermaterial 10 ist weiterhin mehrlagig ausgebildet. Die äußeren Lagen bestehen aus Polypropylen, also aus thermoplastischem Werkstoff. Durch diese Ausbildung können die Filtereigenschaften den Anforderungsbedingungen des Herstellungsprozesses sowie des Filterprozesses durch thermische Behandlung angepaßt werden. Dadurch werden sowohl die äußeren Lagen als auch das innere Filtermedium bereichsweise miteinander verschweißt, verdichtet und ausgesteift. Die zunächst durch den vorangehenden Prägevorgang geringfügig instabil gewordene Wandung der Vorsprünge 30 ist dabei durch die thermische Behandlung wieder ausgesteift worden.

## Patentansprüche

1. Filtereinsatz, bestehend aus einer Vielzahl von in Zick-Zackförmiger Faltung angeordneten Faltenwänden (15-22; 40, 41, 43, 44) für ein in Richtung von einem Kantenbereich (13) der Zick-Zack-Faltung in Richtung auf den gegenüberliegenden Kantenbereich (14) der Faltung durch den Einsatz hindurchtretendes zu filterndes Medium, bestehend aus einem für das zu filternde Medium durchlässigen Material (10) mit aus jeder Faltenwand in Richtung auf eine benachbarte Faltenwand vortretenden, durch Prägung erzeugten Vorsprüngen (30; 45), die sich in Bewegungsrichtung des Mediums erstrecken und, insbesondere eine ihre Breite übersteigende, Länge aufweisen, wobei
die Vorsprünge (30; 45) einander benachbarter Faltenwände (15-22; 40, 41, 43, 44) zur Abstandssicherung und Aussteifung aneinander anliegen und die aneinander anliegenden Vorsprünge (30; 45) zweier über eine Faltenkante verbundener Faltenwände in Richtung auf die gegenüberliegende Faltenkante (23-29; 46) in ihrer Höhe zunehmen und
somit zwischen diesen Faltenwänden (15-22; 40, 41, 43, 44) einen in Bewegungsrichtung des Mediums abnehmenden bzw. nach Durchtritt des Mediums durch die betreffende Faltenwand anwachsenden Abstand festlegen,
wobei die Vorsprünge (30, 45) quer zur Bewegungsrichtung des Mediums eine konstante Breite aufweisen und
daß die Seitenwandungen (300) der Vorsprünge (30, 45) sich senkrecht zu den die Faltenwände (15 bis 22, 40, 41, 43, 44) miteinander verbindenden Faltenkanten (23 bis 29, 46) erstrecken, **gekennzeichnet durch** eine nur die Vorsprünge (30, 45) bedeckende und aussteifende, aushärtbare Beschichtung (38) und/oder Tränkung (38), wobei sich die Beschichtung (38) oder Tränkung (38) auf die Seitenwandungen (300) der Vorsprünge (30, 45) erstreckt und insbesondere die örtliche Dicke der Beschichtungs bzw. die Intensität der Tränkung mit dem Abstand der Erhebung der Vorsprünge (30, 45) bezogen auf die Ebene der Faltenwand (15 bis 22, 40, 41, 43, 44) zunimmt.

2. Filtereinsatz nach Anspruch 1, **dadurch gekennzeichnet,** daß die Beschichtung (38) bzw. Tränkung (38) aus einem Klebstoffmaterial besteht, wobei insbesondere die einander zugewandten Vorsprünge (30, 45) einander benachbarter Faltenwände (15 bis 22, 40, 41, 43, 44) miteinander verklebt sind.

3. Filtereinsatz nach Anspruch 2, **dadurch gekennzeichnet,** daß die Vorsprünge (30, 45) einander benachbarter Faltenwände (15 bis 22, 40, 41, 43, 44) linienförmig aneinandergrenzen, wobei Klebstoff im Bereich dieser Linien aufgetragen ist.

4. Filtereinsatz nach einem der vorangehenden Ansprüche, **dadurch gekennzeichnet,** daß der Bereich des Übergangs (36) von demjenigen Ende des Vorsprungs (30, 45), das den größten Abstand bezogen auf die Ebene der Faltenwand (15 bis 22, 40, 41, 43, 44) aufweist, in die Ebene der Faltenwand (15 bis 22, 40 41, 43, 44) derart ausgebildet ist, daß ein Bereich größerer Steigung zwischen Bereichen geringerer Steigung angeordnet ist, wobei insbesondere die Bereiche geringerer Steigung kontinuierlich in angrenzende ebene Bereiche übergehen.

5. Filtereinsatz nach einem der vorangehenden Ansprüche, **dadurch gekennzeichnet,** daß mindestens einen denk Filtereinsatz (11) durch Verbindung jeweils benachbarter Faltenkanten (35) stabilisierenden Faden (39), der auf Faltenkanten (35) anliegt und im wesentlichen senkrecht zu den Faltenkanten (35) gerichtet ist, vorgesehen ist und insbesondere der den Filtereinsatz (11) stabilisierende Faden (39) derart angeordnet ist, daß er zwischen zwei benachbarten Faltenkanten (35) in gerader Richtung entlang der Stirnseiten der dort aneinander grenzendenden Vorsprünge (30, 45) über der endlos die Faltenkanten (35) und die den Filtereinsatz (11) nach außen begrenzenden Faltenwänden verläuft.

6. Filtereinsatz nach Anspruch 5, **dadurch gekennzeichnet,** daß der den Filtereinsatz (11) stabilisierende Faden (39) im Bereich der den Filtereinsatz (11) nach außen begrenzenden Faltenwände eine Führung zum Einschieben des Filtereinsatzes (11) in ein Filtergehäuse (12) bildet.

7. Filtereinsatz nach Anspruch 5 oder 6, **dadurch gekennzeichnet,** daß der den Filtereinsatz (11) stabilisierende Faden (39) aus einem schäumenden, klebenden und sich verfestigenden Kunststoff besteht.

8. Filtereinsatz nach einem der vorangehenden Ansprüche, **dadurch gekennzeichnet,** daß die Faltenkanten (35) im Faltengrund trapezartig verbreitert ausgebildet sind.

9. Filtereinsatz nach einem der vorangehenden Ansprüche, **dadurch gekennzeichnet,** daß das durchlässige Filtermaterial (10) aus einem thermoplastischen Werkstoff bestehende Fasern, insbesondere aus Polypropylen, Cellulose, Polycarbonat, Polyamid, Teflon und/oder Polyester, enthält, welche durch Verschweißung das Material in sich selbst verdichten bzw. aussteifen oder mit entsprechenden Material verbinden und insbesondere nahtförmige Bereiche vorgesehen sind, in denen die Fasern ohne wesentliche Hohlräume miteinander verbunden sind und/oder das durchlässige Filtermaterial (10) mehrlagig ausgebildet ist, wobei einzelne Lagen bereichsweise miteinander verschweißt sind.

10. Filtereinsatz nach Anspruch 9, **dadurch gekennzeichnet,** daß die äußeren Lagen ebenfalls aus thermoplastischem Material bestehen und insbesondere zur Erzeugung der nahtförmigen Bereiche direkt miteinander verschweißt sind.

11. Filtereinsatz nach Anspruch 9 oder 10, **dadurch gekennzeichnet,** daß die nahtförmigen verschweißten Bereiche als Filmscharnier ausgebildet sind.

## Claims

1. A filter insert, composed of a multiplicity of fold walls (15 - 22; 40, 41, 43, 44), arranged in a zigzag-shaped folding, for a medium to be filtered which passes through the insert in the direction from one edge region (13) of the zigzag folding towards the opposite edge region (14) of the folding, composed of a material (10) permeable to the medium to be filtered, with projections (30; 45) which protrude from each fold wall in the direction of an adjacent fold wall and are produced by embossing and which extend in the direction of movement of the medium and, in particular, have a length exceeding their width, the projections (30; 45) of mutually adjacent fold walls (15-22; 40, 41, 43, 44) bearing on one another for ensuring clearance and for stiffening, and the projections (30; 45) which bear on one another from two fold walls which are connected via a fold edge increasing in height in the direction of the opposite fold edge (23-29; 46) and thus determining between these fold walls (15-22; 40, 41, 43, 44) a clearance decreasing in the direction of movement of the medium or increasing after the passage of the medium through the respective fold wall, the projections (30; 45) having a constant width transversely relative to the direction of movement of the medium, and the side walls (300) of the projections (30; 45) extending perpendicularly to the fold edges (23 to 29, 46) connecting the fold walls (15 to 22; 40, 41, 43, 44) to one another, characterised by a hardenable coating (38) and/or impregnation (38) covering and stiffening the projections (30; 45) only, the coating (38) or impregnation (38) extending onto the side walls (300) of the projections (30, 45) and, in particular, the local thickness of the coating or the intensity of the impregnation increasing with the clearance of the elevation of the projections (30, 45) in relation to the plane of the fold wall (15 to 22, 40, 41, 43, 44).

2. A filter insert according to claim 1, characterized in that the coating (38) or impregnation (38) consists of an adhesive material, in particular the mutually confronting projections (30, 45) of fold walls (15 to 22, 40, 41, 43, 44) adjacent to one another being adhesively bonded to one another.

3. A filter insert according to claim 2, characterized in that the projections (30, 45) of fold walls (15 to 22, 40, 41, 43, 44) adjacent to one another are linearly contiguous with one another, adhesive being applied in the region of these lines.

4. A filter insert according to anyone of the preceding claims, characterized in that the region of the transition (36) from that end of the projection (30, 45) having the largest clearance in relation to the plane of the fold wall (15 to 22, 40, 41, 43, 44) into the plane of the fold wall (15 to 22, 40, 41, 43, 44) is designed in such a way that a region of higher gradient is arranged between regions of lower gradient, in particular the regions of lower gradient merging continuously into contiguous plane regions.

5. A filter insert according to anyone of the preceding claims, characterized in that at least one thread (39), which stabilizes the filter insert (11) by connecting respective adjacent fold edges (35) and which bears on fold edges (35) and is directed essentially perpendicularly to the fold edges (35) is provided, and, in particular, the thread (39) stabilizing the filter insert (11) is arranged in such away that it runs between two adjacent fold edges (35) in a rectilinear direction along the end faces of the projections (30, 45), contiguous with one another there, over the fold walls endlessly limiting the fold edges (35) and the filter insert (11) relative to the outside.

6. A filter insert according to claim 5, characterised in that the thread (39) stabilizing the filter insert (11) forms, in the region of the fold walls limiting the filter insert (11) relative to the outside, a guide for pushing the filter insert (11) into a filter housing (12).

7. A filter insert according to claim 5 or 6, characterised in that the thread (39) stabilizing the filter insert (11) is composed of a foaming, adhesive and solidifying plastic.

8. A filter insert according to any one of the preceding claims, characterised in that the fold edges (35) are designed to be widened in a trapezium-like manner in the fold bottom.

9. A filter insert according to any one of the preceding claims, characterised in that the permeable filter material (10) contains fibres composed of a thermoplastic material, especially of polypropylene, cellulose, polycarbonate, polyamide, Teflon and/or polyester, which, by welding, consolidate the material into itself or stiffen it or connect it to corresponding material, there being provided, in particular, seam-like regions, in which the fibres are connected to one another without appreciable cavities and/or the permeable filter material (10) is of multi-layer design, the individual layers being welded to one another in regions.

10. A filter insert according to claim 9, characterised in that the outer layers are likewise composed of thermoplastic material and, in particular, are welded directly to one another to produce the seam-like regions.

11. A filter insert according to claim 9 or 10, characterised in that the seam-like welded regions are designed as a film hinge.

## Revendications

1. Cartouche filtrante composée d'une multitude de parois plissées (15-22; 40, 41, 43, 44) agencées suivant un pliage en forme de zigzag, pour un fluide à filtrer pénétrant dans la cartouche en direction d'une zone (13) d'arêtes du pliage en zigzag vers la zone (14) d'arêtes opposée du pliage, composée d'un matériau (10) qui laisse passer le fluide à filtrer et comporte des saillies (30; 45) produites par gaufrage, dépassant de chaque paroi plissée en direction d'une paroi plissée voisine, s'étendant dans la direction du déplacement du fluide et présentant, en particulier, une longueur qui dépasse leur largeur,
les saillies (30; 45) des parois plissées voisines les unes des autres (15-22; 40, 41, 43, 44) étant contiguës les unes aux autres pour assurer un écartement et pour obtenir un raidissement, et les saillies (30; 45) contiguës les unes aux autres de deux parois plissées reliées par une arête de pliage augmentant de hauteur en direction de l'arête de pliage (23-29; 46) opposée et
fixant ainsi entre ses parois plissées (15-22; 40, 41, 43, 44) un écartement décroissant en direction du déplacement du fluide et croissant après le passage du fluide à travers la paroi plissée en question,
les saillies (30, 45) présentant, transversalement à la direction de déplacement du fluide, une largeur constante et les parois latérales (300) des saillies (30, 45) s'étendant perpendiculairement aux arêtes de pliage (23 à 29, 46) qui relient les parois plissées (15 à 22, 40, 41, 43, 44) les unes aux autres,
cette cartouche filtrante étant caractérisée par un revêtement (38) et/ou une imprégnation (38) durcissable ne couvrant que les saillies (30, 45) et les raidissant, le revêtement (38) ou l'imprégnation (38) s'étendant sur les parois latérales (300) des saillies (30, 45) et, en particulier, l'épaisseur locale du revêtement ou l'intensité de l'imprégnation augmentant avec la hauteur du relief des saillies (30, 45) par rapport au plan de la paroi plissée (15 à 22, 40, 41, 43, 44).

2. Cartouche filtrante selon la revendication 1, caractérisée en ce que le revêtement (38) ou l'imprégnation (38) est un matériau collant, les saillies se faisant face (30, 45) des parois plissées voisines les unes des autres (15 à 22, 40, 41, 43, 44) étant, en particulier, collées les unes aux autres.

3. Cartouche filtrante selon la revendication 2, caractérisée en ce que les saillies (30, 45) de parois plissées voisines (15 à 22, 40, 41, 43, 44) sont contiguës les unes aux autres en lignes, la colle étant appliquée dans la zone de ces lignes.

4. Cartouche filtrante selon l'une des revendications précédentes, caractérisée en ce que la zone de passage (36) allant de celle des extrémités de la saillie (30, 45) qui présente l'écartement le plus grand par rapport au plan de la paroi plissée (15 à 22, 40, 41, 43, 44), au plan de cette paroi (15 à 22, 40, 41, 43, 44), est réalisée de telle manière qu'une zone d'inclinaison plus forte est située entre des zones d'inclinaison plus faible, les zones d'inclinaison plus faible se transformant, en particulier, de manière continue en zones planes contiguës.

5. Cartouche filtrante selon l'une des revendications précédentes, caractérisée en ce que l'on prévoit au moins un fil (39) stabilisant la cartouche filtrante (11) en reliant les unes aux autres les arêtes de pliage (35) voisines, lequel fil (39) est en contact sur les arêtes de pliage (35) et est dirigé de manière essentiellement perpendiculaire aux arêtes de pliage (35), et en ce que, plus particulièrement, le fil (39) stabilisant la cartouche filtrante (11) est agencé de telle sorte qu'il s'étend, entre deux arêtes de pliage (35) voisines, en direction rectiligne le long des faces frontales des saillies (30, 45) qui, à cet endroit, sont contiguës et, sans interruption, sur les arêtes de pliage (35) et sur les parois plissées limitant la cartouche filtrante (11) vers l'extérieur.

6. Cartouche filtrante selon la revendication 5, caractérisée en ce que le fil (39) stabilisant la cartouche filtrante (11) forme, dans la région des parois plissées limitant la cartouche filtrante (11) vers l'extérieur, un guide servant à glisser celle-ci (11) dans un boîtier de filtre (12).

7. Cartouche filtrante selon l'une des revendications 5 ou 6, caractérisée en ce que le fil (39) stabilisant la cartouche filtrante (11) est en matière plastique moussante, collante et se solidifiant.

8. Cartouche filtrante selon l'une des revendications précédentes, caractérisée en ce que les arêtes de pliage (35) s'élargissent à la manière d'un trapèze dans le fond des plis.

9. Cartouche filtrante selon l'une des revendications précédentes, caractérisée en ce que le matériau filtrant (10) perméable contient des fibres faites d'un matériau thermoplastique, plus particulièrement des fibres en polypropylène, cellulose, polycarbonate, polyamide, téflon et/ou polyester, lesquelles, par soudure, compriment ou raidissent le matériau en lui-même ou le lient avec un matériau correspondant, et en ce que, plus particulièrement, des zones d'assemblage allongées sont prévues, dans lesquelles les fibres sont reliées les unes aux autres sans cavités notables et/ou le matériau filtrant (10) perméable est réalisé en plusieurs couches, les différentes couches étant soudées les unes aux autres par endroits.

10. Cartouche filtrante selon la revendication 9, caractérisée en ce que les couches extérieures sont également faites d'un matériau thermoplastique et sont soudées directement les unes aux autres, en particulier pour former les zones d'assemblage allongées.

11. Cartouche filtrante selon l'une des revendications 9 ou 10, caractérisée en ce que les zones d'assemblage allongées en forme de soudures sont réalisées comme des charnières à bandes.
